# EUROPEAN PATENT SPECIFICATION

(11) **EP 0 459 507 B1**
(45) Date of publication and mention of the grant of the patent: **06.03.1996**
(21) Application number: 91108929.0
(22) Date of filing: 31.05.1991
(51) Int. Cl.: B29D 30/70

(54) **A process to apply a belt band to the carcass of a radial tyre being worked, and tyre obtained by same process**
Verfahren zum Aufbringen eins Gürtels auf die Karkasse eines Radialreifens und verfahrensgemäss hergestellter Reifen
Procédé d'application d'une couche à une carcasse d'un pneu radial, et pneu ainsi obtenu

(30) Priority: 01.06.1990 IT 2050690
(43) Date of publication of application: 04.12.1991
(73) Proprietor: PIRELLI COORDINAMENTO PNEUMATICI S.p.A., I-20126 Milano (IT)
(72) Inventor: Luciano, Sergio, Roma (IT)
(74) Representative: Guella, Paolo

(56) References cited:
- FR-A- 2 215 310
- FR-A- 2 454 916
- LU-A- 61 373
- US-A- 3 608 605
- US-A- 3 756 883
- US-A- 3 972 767
- US-A- 4 815 514

## Description

The present invention relates to a process to apply a belt structure to the carcass of a radial tyre being worked, as well as to the tyre obtained by same process, said tyre being of the type comprising: a substantially toroidal carcass, a belt applied to the outer circumferential extension of the carcass; two sidewalls made of elastomeric material applied to the respective opposite sides of the carcass; and a tread band applied to the outer circumferential extension of the carcass, over said belt and joining the outer perimetrical edges of the sidewalls.

In greater detail, the concerned process is adapted to be used in making tyres for heavy motor-vehicles such as, for example, earthwork machines, farm tractors and the like.

It is known that for uses of the above type tyres of the so-called radial type have been increasingly more adopted. In this type of tyres the ply or plies employed in the carcass manufacture have the respective reinforcing cords disposed in planes containing the geometric axis of the tyre.

In order to give the carcass the due stiffness in the longitudinal direction as well as good features as regards roadholding, the application of the so-called belt structure is provided along the outer circumferential extension of the carcass and at a substantially middle position relative to the equatorial plane of the tyre being worked.

This belt structure substantially consists of a plurality of radially superposed strips made of rubberized fabric, each of them having reinforcing cords disposed alongside one another according to an orientation slightly inclined to the equatorial plane of the tyre being worked and cross-biased to the reinforcing cords belonging to the overlying and/or underlying strip.

US-A- 3 972 767 discloses an apparatus for forming a tire breaker or belt structure, such apparatus comprising an endless work belt supporting a single rubber strip or gum base and means for laying thereon a first layer of inclined sections of rubber covered cords and second layer of oppositely inclined sections of rubber covered cords that are precisely superimposed to the former.

LU-A-61 373 discloses a belt band for tyres formed by a ply of elastomeric material incorporating parallel reinforcing cords, with the end edges of the ply cut at an angle from 75° to 90° to its longitudinal axis.

Presently, for the application of the belt to the carcass the single strips of rubberized fabric are wrapped one at a time about the circumferential extension of the carcass so as to form a complete turn. At the end of the wrapping of each individual rubberized fabric strip, the opposite ends thereof are provided to be joined together by mutual slight overlapping, after cutting them in the extension direction of the reinforcing cords.

In addition the end junctions of the individual rubberized fabric strips must be carried out at different locations in the circumferential extension of the carcass. This expedient, which has been hitherto universally adopted in the field, aims at causing a homogeneous distribution of the different junctions on the circumferential carcass extension at the end of the work, for the purpose of a static and dynamic balancing of the tyre.

In addition, in order to decrease the degree of discontinuity created by the radially overlapped and coincident edges of the individual strips which gives rise to structural unevenness and possible undesired separations of the belt structure edges from the carcass, without at the same time reducing the belt sturdiness even in the critical area thereof, that is at said edges, the rubberized fabric strips are provided to be disposed laterally offset with respect to one another by groups of two. In other words, the first two strips of rubberized fabric applied to the carcass exactly in superposed relation with respect to each other, are laterally offset relative to the two strips applied next.

After the foregoing description, it is apparent that the methods presently adopted for the manufacture of the belt involve an important use of man-power and long working times.

This is due first of all to the fact that the strips forming the belt, owing to the orientation in the opposite ways of the cords in the adjacent strips, must be applied one at a time, and the end cutting and joining operations need to be repeated at each application. In this connection it is to be noted that, when tyres for the above specified uses are to be made, the individual cutting and joining operations are made difficult by the fact that, owing to the important width of the rubberised fabric strips and the reduced inclination angle (on the order of 30°) of the cords relative to the equatorial tyre plane, the end edges along which said cutting and joining operations must be carried out exhibit an important extension.

Also the large diameter of the tyres being worked which brings about a high circumferential extension of the carcass, contributes to making it difficult to execute accurate junctions.

The object of the present invention is substantially to solve the problems of the known art by a process allowing the application of the belt structure to be carried out in a very quick and easy manner, while at the same time also improving the operating features of the obtained tyre.

The foregoing and further objects, will become more apparent in the course of the following description.

According to a first aspect, the present invention consists of a process for applying a belt structure to the carcass of a radial tyre in the manufacturing of a tire for heavy motor-vehicles, comprising the radially superimposing of strips of rubberized fabric containing reinforcing cords inclined to the equatorial plane of the tire and according to cross-biased orientations, characterized in that it comprises the following steps: coupling at least two strips of rubberized fabric, with each strip axially offset by a distance in the range of 5 mm to 20 mm with respect to the strip(s), each strip having respective reinforcing cords parallelly oriented according to an angle of 20° to 30° relative to the longitudinal extension of the strip, so as to form at least a belt band in which the cords of said strips are oriented in a cross-biased manner; cutting the end edges of the belt band in a direction substantially perpendicular to its longitudinal extension so as to give the desired length to said band; wrapping said belt band on the carcass according to at least a turn around the geometric axis thereof and at a substantially centred position with respect to the equatorial plane of the tyre being assembled; overlapping the end edges of the belt band on each other.

In accordance with a second aspect, the present invention consists of a tyre for heavy motor-vehicles comprising: a substantially toroidal carcass; a belt structure applied to the radial outer circumferential extension of the carcass; two sidewalls of elastomeric material applied to the respective opposite sides of the carcass; a tread band applied to the outer circumferential extension of the carcass over said belt structure, and joining the radial outer edges of the sidewalls, said belt structure comprising at least one complete turn of a belt band incorporating parallel reinforcing cords, the edges of said band being cut in a direction substantially parallel to the tire axis and overlapping one over the other, characterized in that said band comprises at least two rubberized fabric strips adhered to each other with each strip axially offset by a distance in the range of 5 mm to 20 mm with respect to the strip(s), each of said strips having a plurality of parallel reinforcing cords oriented at an angle of 15° to 27° with respect to the equatorial plane of the tyre, the cords of one strip intersecting the equatorial plane at an angle that is equal and opposite to the angle of the cords of the adjacent strip.

Further features and advantages will become more apparent from the detailed description of a preferred embodiment of a process to apply a belt structure to a carcass of a tyre being worked, and the tyre obtained by same process, in accordance with the present invention, given hereinafter by way of non-limiting example with reference to the accompanying drawings, in which the only figure is a cut away perspective view of a tyre made in accordance with the invention, generally denoted by 1.

Tyre 1, of the radial type, conventionally comprises a carcass 2 formed with at least a carcass ply 3 the side edges 3a of which are folded back around at least a pair of bead cores 4 each provided with an elastomeric filling 4a on the outer periphery thereof.

The carcass ply 3 has respective reinforcing cords 3b each lying in a plane containing the geometric axis of the carcass 2. Applied to the circumferential extension of carcass 2, at a substantially centred position relative to the equatorial plane of tyre 1, is a belt structure (B) having the task of giving an appropriate stiffness to the carcass in a longitudinal direction.

Still in known manner and therefore described only in short, tyre 1 further comprises two sidewalls 6 of elastomeric material applied to the opposite sides of the carcass 2 and a tread band 7 applied to the outer circumferential edge of carcass 2, over the belt structure, and joined to the outer perimetrical edges of the sidewalls 6. On a finished tyre the tread band 7 and sidewalls 6, as well as the elastomeric material present in known manner in the carcass 2 and the belt structure (B), substantially form a unitary body.

In accordance with the present invention, the application of the belt to the carcass 2 is carried out according to a process first providing the mutual coupling of at least two strips of rubberized fabric 8, 9 preferably having the same width "L" and laterally offset from each other by an appropriate amount "A", so as to form a belt "band" (5): preferably said amount A is in the range of 5 mm to 20 mm.

Each of the rubberized fabric strips 8, 9 is essentially comprised of a plurality of reinforcing cords 8a, 9a, of any appropriate textile or metallic material, preferably a textile material, rayon, nylon, aramide (Kevlar, a trademark, available from DuPont, in its best-known embodiment) or polyester fibers for example, which are disposed parallelly in side by side relation and mutually interlaced by a layer of elastomeric material initially in a raw state. Preferably, when textile materials are used the reinforcing cords 8a, 9a of each strip 8, 9 are distributed according to a closeness in the range of 70 to 120 cords per linear decimetre.

The cords 8a, 9a of each strip 8, 9 are oriented according to an angle of 20° to 30° with respect to the longitudinal extension of the strip, so as to give rise to an inclination, measured on the vulcanized tyre at the equatorial plane, of 15° to 27°, preferably 18° to 24°, relative to said plane.

In addition, in the obtained band the cords 8a, 9a in the rubberized fabric strips 8, 9 are disposed according to cross-biased orientations, preferably symmetrically, as clearly shown in the figure.

The previous coupling of the rubberized fabric strips 8, 9 can be achieved in any convenient manner, for example by making the strips pass between two opposite rollers compressing them against each other so as to cause the mutual adhesion of the same due to the elastomeric material present therein.

The belt band 5 thus obtained is subsequently wrapped on the carcass according to at least a turn about the geometrical axis thereof and at a substantially centred position relative to the equatorial plane of the tyre being worked.

Together with the wrapping step, another step is provided which consists in cutting the belt band to the desired length. In an original manner this step is carried out by cutting the end edges 5a, 5b of the belt band 5 in a direction greatly angled to the lying direction of the cords and in particular substantially at right angles to the longitudinal extension of said band, that is with a symmetric tolerance of 30° (+/- 15°) with respect to the strictly perpendicular direction (90°).

In keeping with one aspect of the process of the invention, the cutting to size of the belt band 5 is carried out before the execution of the wrapping step.

Alternatively, if the belt band is continuously fed onto the carcass 2 during the wrapping, one end edge 5a is cut before the wrapping step, whereas the second end edge 5b will be cut when the wrapping is over. It will be recognized that simultaneously with the cutting of the second end edge 5b, also the cutting of the first end edge belonging to the belt band to be applied next to a new tyre being worked will be obtained.

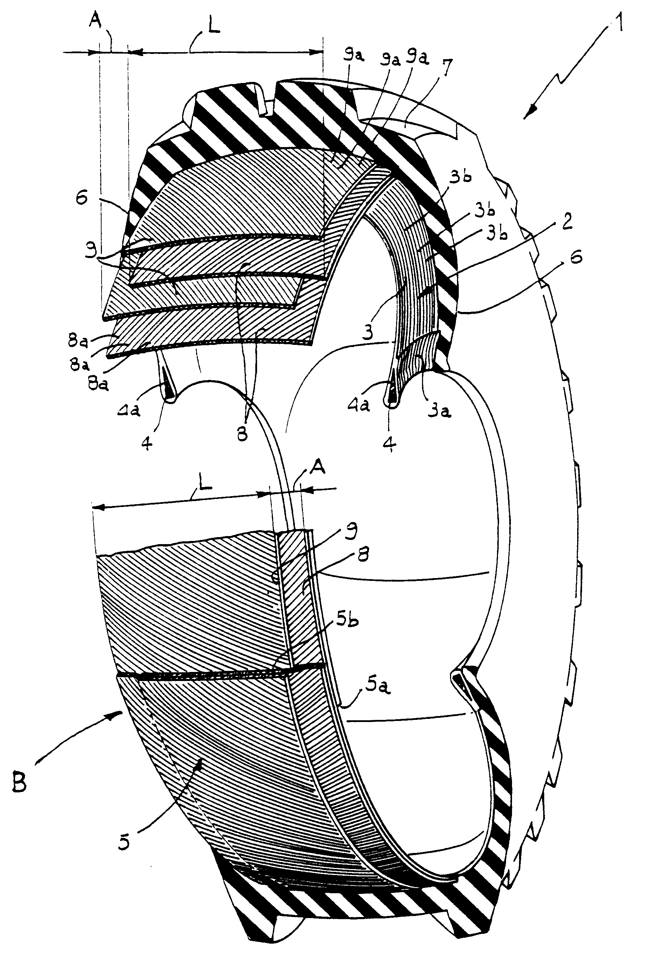

Preferably, as clearly viewed from fig. 1, the wrapping of the belt band 5 takes place according to at least two turns around the geometrical axis of carcass 2, so that the rubberized fabric strips 8, 9 are disposed in a multi-layered overlapping relation and laterally offset in an alternate sequence.

At the end of the application of the belt band 5, the end edges 5a, 5b thereof are mutually overlapped and said overlapping preferably extends over a portion of 20 mm to 80 mm.

When the belt band application has been completed, the tyre manufacture goes on in known and conventional manner, that is the sidewalls 6 and tread band 7 are applied and then the vulcanization step occurs.

It is to be noted that the width "L" of the rubberized fabric strips 8, 9, the amount "A" of the side staggering of the same, and the number of turns according to which the belt band 5 is wrapped around the carcass 2 are selected each time depending upon the type and sizes of the tyre to be achieved. In the connection a Table is reproduced hereinafter in which, by way of example only, the above specified construction parameters relating to some radial tyres produced by the Applicant itself are shown.

**TABLE**

| | W | Dc | Dm | L | A | n |
|---|---|---|---|---|---|---|
| Ex. 1 | 14.9 | 24 | 1058 | 290 | 10 | 2 |
| Ex. 2 | 16.9 | 34 | 1364 | 360 | 10 | 2 |
| Ex. 3 | 18.4 | 38 | 1507 | 390 | 12 | 3 |

In the above Table, columns denoted by "W", "Dc" and "Dm" respectively refer to the maximum cord width expressed in inches, the keying diameter expressed in inches and the maximum diameter, expressed in millimetres, of the tyre carcass at the beginning of the belt laying step. Column "n" indicates the number of turns according to which the belt band 5 is wrapped about the carcass 2. Columns L and A have already been discussed previously.

It has been found that, independently of the construction parameters of the manufactured tyre, the application of the belt band 5 according to the process of the invention enables an important time saving. More particularly, it is noted that the application of the belt band 5 of the invention requires a time that is about four to six times lower than in the known art.

This is due to the fact that the application of several superposed layers of rubberized fabric strips 8, 9 is carried out in a single step involving the wrapping around the carcass and the end cutting and joining. In addition, said cutting and joining operations are also facilitated by the fact that the cutting takes place almost perpendicularly to the longitudinal extension of the belt band 5.

It has also been found that the tyres made in accordance with the invention do not exhibit a reduction of their performances as compared with the tyres of the known art. On the contrary, different laboratory tests carried out by the Applicant itself have proved that the tyres of the invention possess improved qualities as regards their lifetime and/or fatigue limit.

In greater detail, three tyres produced in accordance with Example 1 of the above Table have been submitted to a conventional fatigue test, of the indoor type.

Assuming the average lifetime of conventional tyres to be equal to 100, all size and structural features being equal as well as the test conditions, the tyres of the invention have proved an average lifetime 7% longer than those of the known art. Said indoor fatigue test has been carried out by rotating the tyre, inflated to a pressure of 1.1 bar (the rated pressure in use is 1.6 bar), against the surface of a roller of a diameter of 1700 mm, rotating to a periphery speed of 30 km/h, the tyre being pressed against said roller by exerting a force of 1675 kg (the service load of the tyre is established to 1700 kg).

The inflation pressure, load and test speed have been selected so as to constitute an overload for the tyre structure included between 50% and 100% of the service load.

Four tyres corresponding to Example 2 in the above Table having a service load equal to 2430 kg and a rated pressure of 1.6 bar, submitted to an indoor fatigue test of the discussed type, at a pressure of 1.1 bar and a load of 2395 kg respectively, have shown an average lifetime equal to 116, as usual considering the average lifetime of conventional tyres equal to 100.

Two tyres still corresponding to Example 2 in the above Table have been also submitted to an outdoor fatigue test, in which they have shown an average lifetime of 131, still considering the average lifetime of conventional tyres equal to 100.

The outdoor test has been carried out mounting the tyres on a vehicle running to a speed of 17 kg/h. The tyres, inflated to the rated service pressure of 1.6 bar, have been also mounted so as to have a camber angle of 16° and have been submitted to a load exceeding the maximum service load by 10%.

In this case too the camber angle is selected so as to virtually increase the tyre overload until values included between 50% and 100% of the rated load.

It has also been detected that the geometrical eccentricity of the tyres of the invention is substantially equal to the eccentricity that can be found in tyres which are produced following the conventional technique providing the distribution of the different end junctions of the strips along the periphery extension of the carcass.

The possible (on the other hand not ascertained) slight dynamic unbalancing due to the presence of the overlap of ends 5a, 5b localized at a single point on the circumferential extension of the carcass 2, is of little importance since the tyres of the concerned type are always used at low operating speeds, generally not higher than 50 km/h.

The present invention attains the intended purposes.

Obviously modifications and variations can be made to the invention as conceived, all of them falling within the scope of the inventive idea.

## Claims

1. A process to apply a belt structure to the carcass of a radial tyre in the manufacturing of a tyre for heavy motor-vehicles, comprising the radially superimposing of strips of rubberized fabric containing reinforcing cords inclined to the equatorial plane of the tyre and according to cross-biased orientations, characterized in that it comprises the following steps:
- coupling at least two strips of rubberized fabric (8, 9), with each strip axially offset by a distance in the range of 5 mm to 20 mm with respect to the strip(s), each strip having respective reinforcing cords (8a, 9a) parallelly oriented according to an angle of 20° to 30° relative to the longitudinal extension of the strip, so as to form at least a belt band (5) in which the cords (8a, 9a) of said strips (8,9) are oriented in a cross-biased manner;
- cutting the end edges (5a, 5b) of the belt band (5) in a direction substantially perpendicular to its longitudinal extension so as to give the desired length to said band (5);
- wrapping said belt band (5) on the carcass (2) according to at least a turn around the geometric axis thereof and at a substantially centred position with respect to the equatorial plane of the tyre being assembled;
- overlapping the end edges (5a, 5b) of the belt band (5) on each other.

2. A process according to claim 1, characterized in that the belt band (5) wrapping comprises at least two turns around the geometrical axis of the carcass (2).

3. A process according to claim 1, characterized in that the amount of mutual overlapping of said end edges (5a, 5b) is comprised between 20 mm and 80 mm.

4. A process according to claim 1, characterized in that the step of cutting the end edges (5a, 5b) of the belt band (5) provides the following steps:
- cutting a first end edge (5a) of the belt band (5) after said coupling step, before the band is submitted to the wrapping step on the carcass (2);
- cutting a second end edge (5b) of the belt band (5) after this latter has been wrapped around the carcass (2).

5. A process according to claim 1, characterized in that the cutting of the end edges (5a, 5b) of the belt band (5) is carried out after said coupling step and before said wrapping step.

6. A tyre for heavy motor-vehicles comprising:
- a substantially toroidal carcass (2);
- a belt structure (B) applied to the radial outer circumferential extension of the carcass (2);
- two sidewalls (6) of elastomeric material applied to the respective opposite sides of the carcass (2);
- a tread band (7) applied to the outer circumferential extension of the carcass (2) over said belt structure (B), and joining the radial outer edges of the sidewalls (6), said belt structure (B) comprising at least one complete turn of a belt band (5) incorporating parallel reinforcing cords, the edges of said band being cut in a direction substantially parallel to the tyre axis and overlapping one over the other,
characterized in that said belt band comprises at least two rubberized fabric strips (8, 9) adhered to each other with each strip axially offset by a distance in the range of 5 mm to 20 mm with respect to the strip(s), each of said strips having a plurality of parallel reinforcing cords (8a, 9a) oriented at an angle of 15° to 27° with respect to the equatorial plane of the tyre (1), the cords of one strip intersecting the equatorial plane at an angle that is equal and opposite to the angle of the cords of the ajacent strip.

7. A tyre according to claim 6, characterized in that said belt band (5) is wrapped on the carcass (2) with at least two turns around the radial outer surface of the carcass.

8. A tyre according to claim 6, characterized in that the end edges (5a, 5b) of the belt band (5) are overlapped over a portion in the range of 20 mm to 80 mm.

9. A tyre according to claim 6, characterized in that said reinforcing cords (8a, 9a) of said rubberized fabric strips (8, 9) are cords of textile material.

10. A tyre according to claim 9, characterized in that in each of said rubberized fabric strips (8, 9) said reinforcing cords (8a, 9a) are distributed according to a closeness in the range of 70 to 120 cords per linear decimetre.

## Patentansprüche

1. Verfahren zum Aufbringen eines Gurtaufbaus auf eine Karkasse eines Radialreifens bei der Herstellung eines Reifens für Schwerlastfahrzeuge, bei welchem Bänder aus gummiertem Gewebe, welche Verstärkungskorde enthalten, die zur Äquatorialebene des Reifens und entsprechend kreuzend schrägen Ausrichtungen geneigt sind, radial übereinander gelegt werden, dadurch gekennzeichnet, daß es folgende Schritte aufweist:
- Verbinden von wenigstens zwei Bändern (8, 9) aus gummiertem Gewebe, wobei jedes Band um einen Abstand im Bereich von 5 mm bis 20 mm bezüglich des Bandes (der Bänder) axial versetzt ist und jedes Band entsprechende Verstärkungskorde (8a, 9a) aufweist, die entsprechend einem Winkel von 20° bis 30° bezüglich der Längserstreckung des Bandes parallel ausgerichtet sind, so daß wenigstens ein Gurtband (5) gebildet wird, bei welchem die Korde (8a, 9a) der Bänder (8, 9) in einer kreuzend schrägen Weise ausgerichtet sind,
- Schneiden der Stirnränder (5a, 5b) des Gurtbandes (5) in einer Richtung im wesentlichen senkrecht zu seiner Längserstreckung, um dem Band (5) die gewünschte Länge zu geben,
- Wickeln des Gurtbandes (5) auf die Karkasse (2) mit wenigstens einer Windung um ihre geometrische Achse herum und in einer im wesentlichen zentrierten Position bezüglich der Äquatorialebene des aufzubauenden Reifens und
- Überlappen der Stirnränder (5a, 5b) des Gurtbandes (5) aufeinander.

2. Verfahren nach Anspruch 1, dadurch gekennzeichnet, daß das Wickeln des Gurtbandes (5) wenigstens zwei Windungen um die geometrische Achse der Karkasse (2) aufweist.

3. Verfahren nach Anspruch 1, dadurch gekennzeichnet, daß der Betrag der gegenseitigen Überlappung der Stirnränder (5a, 5b) zwischen 20 mm und 80 mm beträgt.

4. Verfahren nach Anspruch 1, dadurch gekennzeichnet, daß der Schritt des Schneidens der Stirnränder (5a, 5b) des Gurtbandes (5) die folgenden Schritte aufweist:
- Schneiden eines ersten Stirnrandes (5a) des Gurtbandes (5) nach dem Verbindungsschritt bevor das Band dem Wickelschritt auf die Karkasse (2) unterworfen wird und
- Schneiden eines zweiten Stirnrandes (5b) des Gurtbandes (5), nachdem dieses letztere um die Karkasse (2) gewikkelt worden ist.

5. Verfahren nach Anspruch 1, dadurch gekennzeichnet, daß das Schneiden der Stirnränder (5a, 5b) des Gurtbandes (5) nach dem Verbindungsschritt und vor dem Wickelschritt ausgeführt wird.

6. Reifen für Schwerlastfahrzeuge
- mit einer im wesentlichen toroidförmigen Karkasse (2),
- mit einem Gurtaufbau (B), der auf die radiale äußere Umfangserstreckung der Karkasse (2) aufgebracht ist,
- mit zwei Seitenwänden (6) aus elastomerem Material, das an den jeweiligen gegenüberliegenden Seiten der Karkasse (2) angebracht ist,
- mit einem Laufflächenband (7), das auf die äußere Umfangserstreckung der Karkasse (2) über dem Gurtaufbau (B) aufgebracht ist, wobei die radialen äußeren Ränder der Seitenwände (6) verbunden sind, der Gurtaufbau (B) wenigstens eine komplette Windung eines Gurtbandes (5) aufweist, das parallele Verstärkungskorde enthält, und die Ränder des Bandes in eine Richtung im wesentlichen parallel zu der Reifenachse geschnitten sind und einander überlappen,
dadurch gekennzeichnet, daß das Gurtband wenigstens zwei gummierte Gewebebänder (8, 9) aufweist, die haftend aneinander befestigt sind, wobei jedes Band axial um einen Abstand in dem Bereich von 5 mm bis 20 mm bezüglich des Bandes (der Bänder) versetzt ist, jedes der Bänder eine Vielzahl von parallelen Verstärkungskorden (8a, 9a) hat, die in einem Winkel von 15° bis 27° bezüglich der Äquatorialebene des Reifens (1) ausgerichtet sind, und die Korde eines Bandes die Äquatorialebene in einem Winkel schneiden, der gleich dem Winkel der Korde des benachbarten Bandes und entgegengesetzt dazu ist.

7. Reifen nach Anspruch 6, dadurch gekennzeichnet, daß das Gurtband (5) auf die Karkasse (2) mit wenigstens zwei Windungen um die radiale äußere Oberfläche der Karkasse herum gewickelt ist.

8. Reifen nach Anspruch 6, dadurch gekennzeichnet, daß die Stirnränder (5a, 5b) des Gurtbandes (5) über einem Abschnitt im Bereich von 20 mm bis 80 mm überlappt sind.

9. Reifen nach Anspruch 6, dadurch gekennzeichnet, daß die Verstärkungskorde (8a, 9a) der gummierten Gewebebänder (8, 9) Korde aus Textilmaterial sind.

10. Reifen nach Anspruch 9, dadurch gekennzeichnet, daß in jedem der gummierten Gewebebänder (8, 9) die Verstärkungskorde (8a, 9a) mit einer Dichte im Bereich von 70 bis 120 Korde pro linearem Dezimeter verteilt sind.

## Revendications

1. Procédé pour appliquer une structure de ceinture sur la carcasse d'un pneumatique radial lors de la fabrication d'un pneumatique pour poids-lourds, comprenant la superposition radiale de rubans de tissu caoutchouté qui contiennent des câblés de renfort inclinés par rapport au plan équatorial du pneumatique et disposés suivant des orientations biaisées et croisées,
caractérisé en ce qu'il comprend les étapes consistant à :
- associer au moins deux rubans (8, 9) de tissu caoutchouté, chaque ruban étant décalé axialement d'une distance comprise entre 5 et 20 mm par rapport aux autres rubans, chaque ruban contenant respectivement des câblés de renfort (8a, 9a) orientés parallèlement et faisant un angle de 20 à 30° par rapport à la dimension longitudinale du ruban, afin de former au moins une bande de ceinture (5) dans laquelle les câblés (8a, 9a) desdits rubans (8, 9) sont orientés de façon biaisée et croisée,
- couper les bords d'extrémité (5a, 5b) de ladite bande de ceinture (5) dans une direction sensiblement perpendiculaire à sa dimension longitudinale, de façon à donner la longueur voulue à ladite bande (5),
- enrouler ladite bande de ceinture (5) sur la carcasse (2) en faisant au moins un tour autour de l'axe géométrique de cette dernière et en une position sensiblement centrée par rapport au plan équatorial du pneumatique que l'on est en train d'assembler,
- faire chevaucher les bords d'extrémité (5a, 5b) de ladite bande de ceinture (5).

2. Procédé selon la revendication 1, caractérisé en ce que ledit enroulement de la bande de ceinture (5) comprend au moins deux tours autour de l'axe géométrique de la carcasse (2).

3. Procédé selon la revendication 1, caractérisé en ce que la valeur du chevauchement mutuel desdits bords d'extrémité (5a, 5b) est comprise entre 20 et 80 mm.

4. Procédé selon la revendication 1, caractérisé en ce que l'étape de coupe des bords d'extrémité (5a, 5b) de la bande de ceinture (5) se décompose en les étapes suivantes :
- coupe d'un premier bord d'extrémité (5a) de ladite bande de ceinture (5), après ladite étape d'association mais avant que la bande de ceinture ne soit soumise à l'étape d'enroulement sur la carcasse (2),
- coupe d'un second bord d'extrémité (5b) de ladite bande de ceinture (5), après que celle-ci ait été enroulée autour de la carcasse (2).

5. Procédé selon la revendication 1, caractérisé en ce que la coupe des bords d'extrémité (5a, 5b) de ladite bande de ceinture (5) est effectuée après ladite étape d'association et avant ladite étape d'enroulement.

6. Pneumatique pour poids-lourds, comprenant :
- une carcasse (2) sensiblement toroïdale,
- une structure de ceinture (B) appliquée sur la longueur radiale de la périphérie extérieure de la carcasse (2),
- deux flancs (6) en matériau élastomère appliqués sur les côtés opposés respectifs de la carcasse (2),
- une bande de roulement (7) appliquée sur la longueur périphérique extérieure de la carcasse (2), au-dessus de ladite structure de ceinture (B), et unissant les bords radiaux extérieurs des flancs (6), ladite structure de ceinture (B) contenant au moins un tour complet d'une bande de ceinture (5) qui contient des câblés de renfort parallèles, les bords de ladite bande étant coupés dans une direction sensiblement parallèle à l'axe du pneumatique et se chevauchant l'un l'autre,
caractérisé en ce que ladite bande comprend au moins deux rubans (8, 9) de tissu caoutchouté collés l'un à l'autre, chaque ruban étant décalé axialement d'une valeur comprise entre 5 et 20 mm par rapport aux autres rubans, chaque ruban contenant une pluralité de câblés de renfort (8a, 9a), parallèles, orientés suivant un angle de 15 à 27° par rapport au plan équatorial du pneumatique (1), les câblés d'un ruban croisant le plan équatorial suivant un angle qui est égal et opposé à l'angle des câblés du ruban adjacent.

7. Pneumatique selon la revendication 6, caractérisé en ce que ladite bande de ceinture (5) est enroulée sur la carcasse (2) en faisant au moins deux tours autour de la surface radiale extérieure de la carcasse.

8. Pneumatique selon la revendication 6, caractérisé en ce que les bords d'extrémité (5a, 5b) de ladite bande de ceinture (5) se chevauchent sur une longueur comprise entre 20 et 80 mm.

9. Pneumatique selon la revendication 6, caractérisé en ce que lesdits câblés de renfort (8a, 9a) desdits rubans (8, 9) de tissu caoutchouté sont des câblés en matériau textile.

10. Pneumatique selon la revendication 9, caractérisé en ce que, dans chaque ruban (8, 9) de tissu caoutchouté, lesdits câblés de renfort (8a, 9a) sont répartis suivant une densité comprise entre 70 et 120 câblés par décimètre linéaire.
